# EUROPÄISCHE PATENTSCHRIFT

(11) **EP 0 401 718 B1**
(45) Veröffentlichungstag und Bekanntmachung des Hinweises auf die Patenterteilung: **09.03.1994**
(21) Anmeldenummer: 90110526.2
(22) Anmeldetag: 02.06.1990
(51) Int. Cl.: B23Q 3/157, B23Q 3/155, B25J 15/04

(54) **Wechseleinrichtung für Werkzeugspindelträger an einer Bearbeitungsmaschine**
Exchangeable device for a tool spindle bearer for a machine tool
Dispositif échangeur pour support de broche d'outils sur une machine d'usinage

(30) Priorität: 09.06.1989 DE 3918901
(43) Veröffentlichungstag der Anmeldung: 12.12.1990
(73) Patentinhaber: Gebr. Heller Maschinenfabrik GmbH, D-72622 Nürtingen (DE)
(72) Erfinder: Schweizer, Ernst, D-7440 Nürtingen (DE); Kalestra, Horst, D-7441 Neckartenzlingen (DE)
(74) Vertreter: Jackisch-Kohl, Anna-Katharina

(56) Entgegenhaltungen:
- EP-A- 0 204 151
- DE-A- 2 844 319
- DE-A- 3 329 539
- DE-A- 3 522 488
- DE-A- 3 614 807
- DE-A- 3 715 140
- DE-A- 3 731 280
- US-A- 4 354 306

## Beschreibung

Die Erfindung betrifft eine Wechseleinrichtung für Werkzeugspindelträger an einer Bearbeitungsmaschine nach dem Oberbegriff des Anspruches 1.

Solche Wechseleinrichtungen dienen dazu, mit Werkzeugen bestückte Werkzeugspindelträger von einem Speicher- bzw. Ablageplatz aus zu einer Antriebseinheit der Bearbeitungsmaschine und umgekehrt zu transportieren. Bekannte Wechseleinrichtungen sind als Ringe ausgebildet, längs der die Halterungen für die Aufnahmeteile der Werkzeugspindelträger angeordnet sind. Um den Wechselring mit den Werkzeugspindelträgern kuppeln bzw. von ihnen entkuppeln zu können, ist eine aufwendige Antriebseinrichtung mit Schlitten, Hilfsschlitten, Steuerkurven und Drehantrieb erforderlich. Da der gesamte Ring beim Wechseln gedreht wird, sind die bewegten Massen verhältnismäßig groß. Außerdem benötigt die Wechseleinrichtung verhältnismäßig viel Raum.

Bei der gattungsgemäßen Wechseleinrichtung (EP-A-0 204 151) ist als Arm eine Platte vorgesehen, die um eine mittig liegende vertikale Achse gedreht werden kann. An einander gegenüberliegenden Enden des Armes ist jeweils eine Halterung befestigt, die drehbare Verriegelungsorgane aufweist, auf die die Werkzeugspindelträger zur hängenden Lagerung gesteckt werden können. Die Werkzeugspindelträger haben T-förmige Nuten, in die die Greiforgane der Halterungen eingreifen, die zum Verriegeln der Werkzeugspindelträger um ihre Achsen gedreht werden. Da die gesamte Platte mit den beiden Halterungen beim Wechseln gedreht wird, sind die bewegten Massen verhältnismäßig groß. Auch benötigt die Wechseleinrichtung großen Raum, so daß mit solchen Wechseleinrichtungen ausgestattete Bearbeitungsmaschinen nur in entsprechend großem Abstand nebeneinander aufgestellt werden können. Dies ist nachteilig, wenn solche Bearbeitungsmaschinen in Transferstraßen eingesetzt werden sollen, weil dort die Bearbeitungsmaschinen mit möglichst geringem Abstand nebeneinander aufgestellt sein sollen.

Bei einer anderen bekannten Wechseleinrichtung (DE-C2-18 13 989) ist die Halterung in Form einer heb- und senkbaren Hängebühne ausgebildet, die Teil eines Stoßschlittens ist. Er kann im Bereich oberhalb des Werkzeugspindelträgers horizontal verfahren werden. Die Hängebühne hat Schlitze, mit denen sie in Bundbolzen des Werkzeugspindelträgers eingehängt werden. Der eingehängte Werkzeugspindelträger liegt auf einem Kettenförderer auf, mit dem er zusammen mit dem Stoßschlitten auf eine Plattform geschoben wird. Sie wird mit Hilfe eines Kolbenzylinderaggregates in die vertikale Bewegungsbahn einer heb- und senkbaren Plattform verschoben. Mit ihr wird der auf ihr lagernde Werkzeugspindelträger in den Bereich unterhalb einer Tragscheibe angehoben, in die der Werkzeugspindelträger mit seinen Bundbolzen wiederum eingehängt wird.

Diese Wechseleinrichtung ist konstruktiv sehr aufwendig ausgebildet. Zum Transport der Werkzeugspindelträger sind nicht nur die Fördereinrichtung und der Stoßschlitten mit der höhenverstellbaren Hängebühne notwendig, sondern es sind noch die Plattform, die heb- und senkbare Plattform und die Tragscheibe erforderlich, um den Werkzeugspindelträger zur Antriebseinheit der Bearbeitungsmaschine zu transportieren. Darüberhinaus hat die Wechseleinrichtung erheblichen Raumbedarf. Häufig stehen Bearbeitungsmaschinen längs Transferstraßen, an denen sie mit möglichst geringem Abstand nebeneinander aufgestellt sein sollen, damit die Transferstraße nur wenig Raum benötigt. Infolge der Wechseleinrichtungen können die Bearbeitungsmaschinen jedoch nicht sehr eng nebeneinander aufgestellt werden. Da beim Wechseln der Werkzeugspindelträger der gesamte Stoßschlitten bewegt werden muß, sind auch die bewegten Massen verhältnismäßig groß.

Eine andere bekannte Wechseleinrichtung (DE-A1-37 31 280) hat einen als einarmiger Hebel ausgebildeten schwenkbaren Greiferarm, an dessen freiem Ende ein weiterer Schwenkarm vorgesehen ist, der um die Schwenkachse schwenkt. Mit dieser Wechseleinrichtung werden aber nur Einzelwerkzeuge gewechselt. Am Schwenkarm sind zwei seitlich auslenkbare Greifer vorgesehen, die durch eine Feder unter Vorspannung gehalten werden. Es sind somit zusätzliche bewegliche Bauteile erforderlich, um das zu wechselnde Einzelwerkzeug erfassen zu können. Dadurch wird der konstruktive Aufwand der Wechseleinrichtung erhöht. Die beweglichen Greifer sind zudem störanfällig.

Der Erfindung liegt die Aufgabe zugrunde, die gattungsgemäße Wechseleinrichtung so auszubilden, daß sie kompakt ausgebildet ist und dementsprechend nur wenig Raum für den Wechselvorgang benötigt und beim Wechseln selbst nur geringe Massen bewegt werden müssen.

Diese Aufgabe wird bei der gattungsgemäßen Wechseleinrichtung erfindungsgemäß mit den kennzeichnenden Merkmalen des Anspruches 1 gelöst.

Bei der erfindungsgemäßen Wechseleinrichtung ist lediglich der als einarmiger Hebel ausgebildete schwenkbare Greiferarm vorgesehen, der an seinem freien Ende die als Drehkörper ausgebildete Greiferhand aufweist. Die bewegten Massen der erfindungsgemäßen Wechseleinrichtung sind darum gering. Zum Transportieren der Werkzeugspindelträger ist es lediglich erforderlich, die Greiferhand mit den Aufnahmeteilen des Werkzeugträgers zu kuppeln und dann den Greiferarm zu verschwenken. Hierbei wird die Greiferhand relativ zum Greiferarm um ihre Achse so gedreht, daß der Werkzeugspindelträger in der richtigen Lage an die Bearbeitungsmaschine bzw. deren Antriebseinheit angeschlossen werden kann. Auf den unbeweglichen Griffleisten lassen sich die Werkzeugspindelträger mit ihren Aufnahmeteilen zuverlässig auflagern. Die Werkzeugspindelträger hängen unter ihrem Gewicht mit den Aufnahmeteilen auf den Griffleisten, so daß ein zuverlässiger Transport der Werkzeugspindelträger gewährleistet ist. Da die Greiferhand als Drehkörper ausgebildet ist, kann sie so ausgebildet werden, daß sie nicht oder nur unwesentlich über den Greiferarm ragt. Der Raumbedarf der Greiferhand beim Wechselvorgang entspricht lediglich der Projektionsfläche der Greiferhand in die Horizontalebene. Dadurch hat die Wechseleinrichtung nur einen geringen Arbeitsdurchmesser, d.h. der zum Wechseln der Werkzeugspindelträger benötigte Raum kann sehr klein gehalten werden. Da die Griffleisten und auch die Aufnahmeteile unbewegliche Bauteile sind, die für die Kupplung zwischen Greiferhand und Werkzeugspindelträger keine Greifbewegungen oder dgl. ausführen müssen, sind für die Griffleisten und Aufnahmeteile auch keine entsprechenden Antriebe oder beweglichen Bauteile erforderlich. Die erfindungsgemäße Wechseleinrichtung zeichnet sich darum durch einen konstruktiv sehr einfachen und wenig störanfälligen Aufbau aus.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: eine an einer Bearbeitungsmaschine vorgesehene erfindungsgemäße Wechseleinrichtung, deren Greiferarm eine erste Stellung einnimmt,
- Fig. 2: die Bearbeitungsmaschine mit der erfindungsgemäßen Wechseleinrichtung gemäß Fig. 1, deren Greiferarm eine zweite Stellung einnimmt,
- Fig. 3: eine Draufsicht auf eine mit der erfindungsgemäßen Wechseleinrichtung versehene Bearbeitungsmaschine, an deren einer Seite ein Speichersystem für den Werkzeugspindelträger und an deren anderer Seite ein ortsfestes Werkzeugmagazin für Einzelwerkzeuge angeordnet ist,
- Fig. 4: in einer Darstellung entsprechend Fig. 3 eine weitere Möglichkeit der Ausbildung eines Speichersystems an der Bearbeitungsmaschine mit der erfindungsgemäßen Wechseleinrichtung,
- Fig. 5: in vergrößerter Darstellung einen Schnitt längs der Linie V-V in Fig. 4,
- Fig. 6: in vergrößerter Darstellung eine Greiferhand der erfindungsgemäßen Wechseleinrichtung, in die Aufnahmebolzen eines Werkzeugspindelträgers eingefahren sind,
- Fig. 7: einen Schnitt längs der Linie VII-VII in Fig. 6.

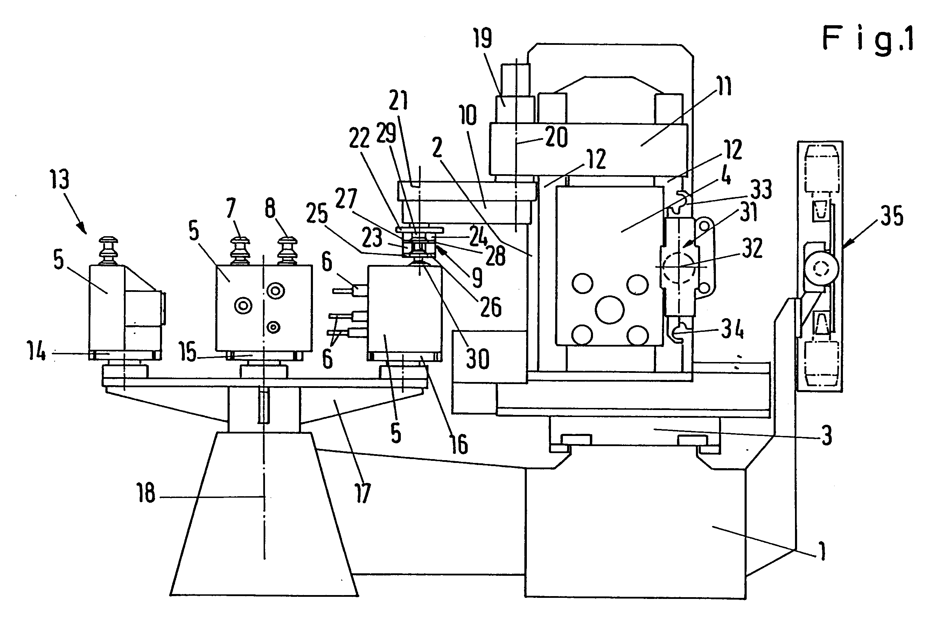

Die Bearbeitungsmaschine gemäß Fig. 1 hat ein Maschinenbett 1, auf dem über eine Schlitteneinheit 3 ein Ständer 2 verfahrbar ist. Auf der Schlitteneinheit 3 ist der Ständer 2 quer zur Verfahrrichtung der Schlitteneinheit seinerseits verfahrbar. Der Ständer 2 ist mit einer Antriebseinheit 4 versehen, an die in bekannter Weise Werkzeugspindelträger 5 gekuppelt werden können. Die im Werkzeugspindelträger 5 gelagerten Werkzeuge 6 werden dann in bekannter Weise von der Antriebseinheit 4 aus drehbar angetrieben. Jeder Werkzeugspindelträger 5 weist an seiner Oberseite zwei Aufnahmebolzen 7 und 8 auf, mit denen er in einer Greiferhand 9 eines Greiferarms 10 gehaltert wird. Er ist an einer Lagerbrücke 11 schwenkbar gelagert, die entweder am Ständer 2 fest angeordnet oder an der Antriebseinheit 4 vorgesehen sein kann, die längs vertikaler Führungen 12 verfahrbar ist.

Der Ständer 2 wird motorisch über die Schlitteneinheit 3 in Richtung auf das zu bearbeitende Werkstück gefahren, das mit den Werkzeugen 6 des mit der Antriebseinheit 4 gekuppelten Werkzeugspindelträgers 5 bearbeitet wird. Da der Ständer 2 auch quer zur Fahrtrichtung der Schlitteneinheit 3 verstellbar und außerdem die Antriebseinheit 4 mit dem angekuppelten Werkzeugspindelträger 5 über den Schlitten 12 auch in Höhenrichtung verstellbar ist, können die Werkzeuge 6 exakt in die gewünschte Bearbeitungsposition gebracht werden.

Auf der einen Seite des Maschinenbettes 1 befindet sich ein Speichersystem 13, das Ablageplätze 14 bis 16 für die Werkzeugspindelträger 5 hat. Die Ablageplätze 14 bis 16 können auf einem Drehkreuz 17 vorgesehen sein, das um eine vertikale Achse 18 drehbar ist. Dadurch können die Ablageplätze mit den darauf befindlichen Werkzeugspindelträgern 5 in die Greifposition gemäß Fig. 1 verstellt werden, in der die Greiferhand 9 des Greiferarmes 10 den jeweiligen Werkzeugspindelträger 5 ergreifen kann.

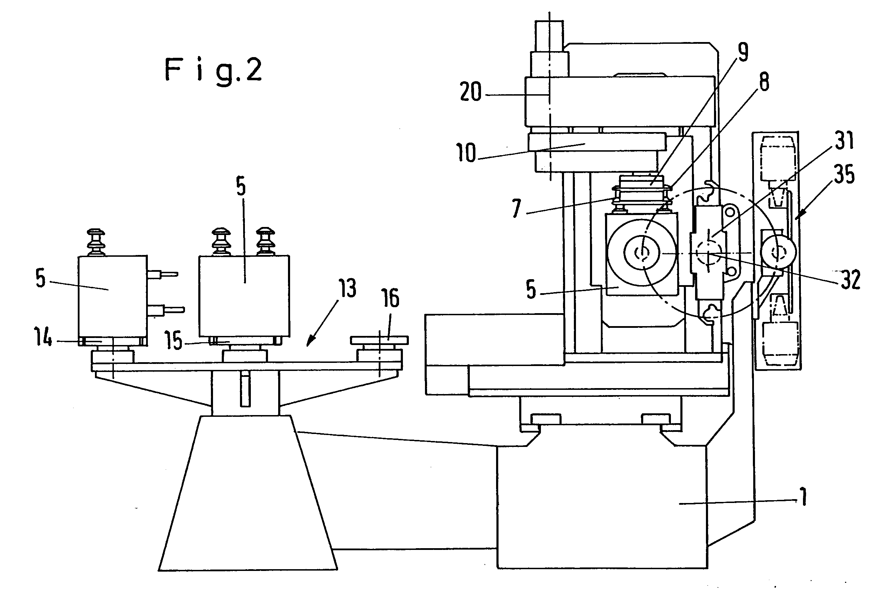

Fig. 1 zeigt den Greiferarm 10 in seiner ersten Endstellung, in der seine Greiferhand 9 den Werkzeugspindelträger 5 auf dem Ablageplatz 16 an den Aufnahmebolzen 7 und 8 erfaßt. Anschließend wird der Greiferarm 10 mittels eines Motors 19, der auf der Lagerbrücke 11 vorgesehen ist, um eine vertikale Achse 20 um 180° in die in Fig. 2 dargestellte zweite Endstellung geschwenkt. Bei dieser Schwenkbewegung wird die Greiferhand 9 entgegen der Schwenkrichtung des Greiferarms 10 um 90° um die vertikale Achse 21 zurückgedreht, so daß der an ihm hängende Werkzeugspindelträger 5 an die Antriebseinheit 4 gekuppelt werden kann. Nach dem Ankuppeln des Werkzeugträgers 5 an die Antriebseinheit 4 kann der Greiferarm 10, sofern die Lagerbrücke 11 fest am Ständer 2 angeordnet ist, in eine Parkstellung zurückgeschwenkt werden, in der er den Werkzeugspindelträger 5 freigibt.

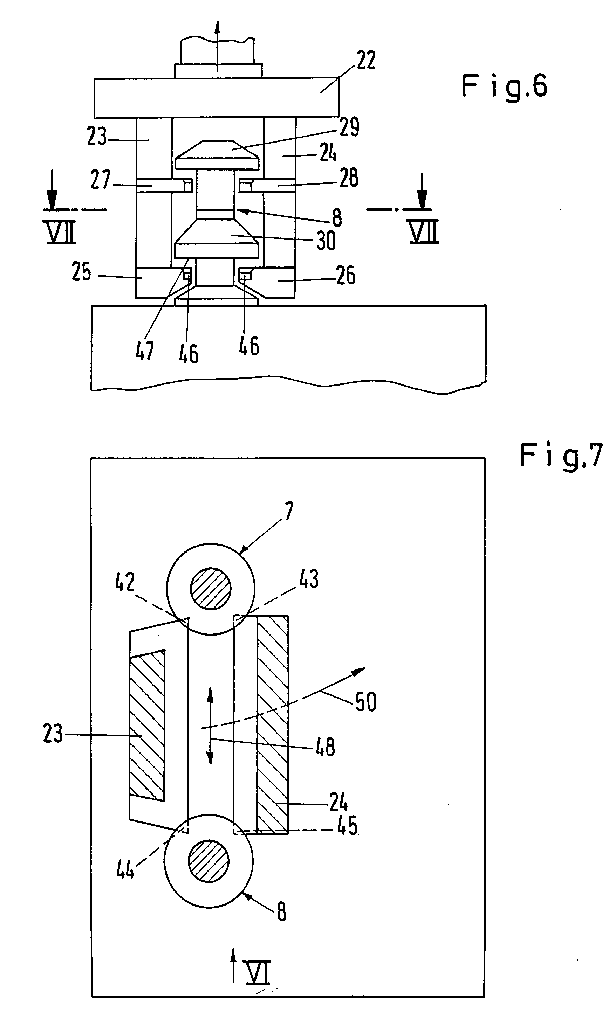

Wie Fig. 1 und 6 zeigen, hat die Greiferhand 9 eine horizontal liegende Tragplatte 22, von der zwei mit Abstand voneinander liegende Platten 23 und 24 senkrecht nach unten abstehen. An ihren Unterseiten ist jeweils eine Griffleiste 25 und 26 befestigt, die in Richtung zueinander von der Platte 23 bzw. 24 senkrecht abstehen. Mit Abstand oberhalb der Griffleisten 25, 26 sind die Platten 23, 24 mit jeweils einer weiteren Griffleiste 27 und 28 versehen, die in Richtung zueinander ebenfalls senkrecht von den Platten 23 und 24 abstehen.

Die Aufnahmebolzen 7, 8 der Werkzeugspindelträger 5 haben jeweils zwei mit Abstand übereinanderliegende Kegelstumpfabschnitte 29 und 30, die sich nach unten verbreitern. Mit ihrer Unterseite liegen die Kegelstumpfabschnitte 30 auf den Griffleisten 25, 26 auf. Sie haben in den Eckbereichen 42 bis 45 (Fig. 7) Vertiefungen 46, auf deren Boden die Kegelstumpfabschnitte 30 mit ihren ebenen Unterseiten 47 aufliegen. Die Vertiefungen 46 sind den Kegelstumpfabschnitten 30 angepaßt, so daß die Werkzeugspindelträger 5 lagegesichert sind. Der Abstand zwischen den jeweils auf gleicher Höhe einander gegenüberliegenden Griffleisten 25, 26 und 27, 28 ist größer als der Durchmesser der Aufnahmebolzen 7 und 8 im Bereich zwischen den Kegelstumpfabschnitten 29 und 30, deren Durchmesser jedoch größer ist als der Abstand zwischen den Griffleisten 25 und 26 bzw. 27 und 28. Dadurch ist gewährleistet, daß die Greiferhand 9 in Richtung des Doppelpfeiles 48 relativ zum Werkzeugspindelträger 5 verschiebbar ist. Die Kegelstumpfabschnitte 29 bilden Lagesicherungen, die in entsprechend angebrachte Aussparungen 49 an den Eckbereichen der Griffleisten 27, 28 eingreifen.

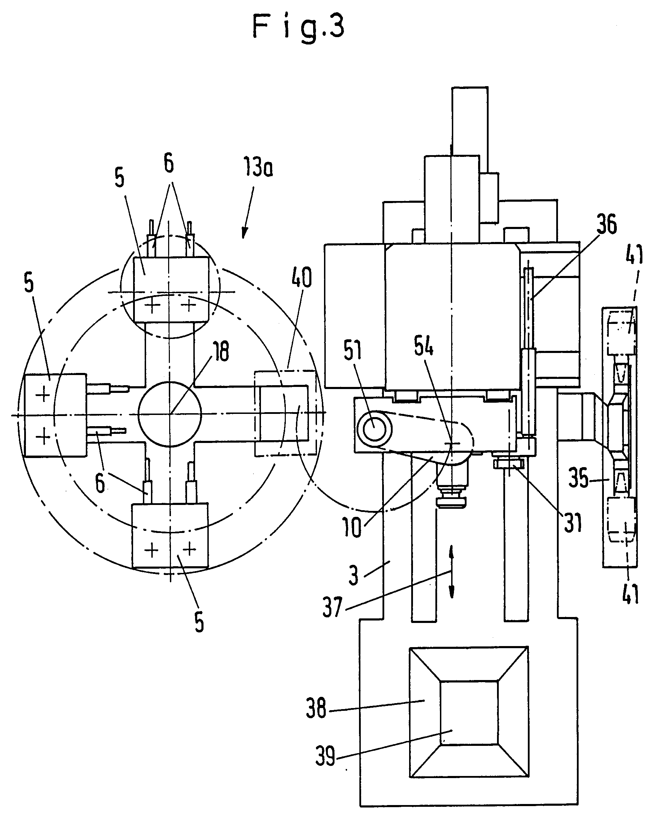

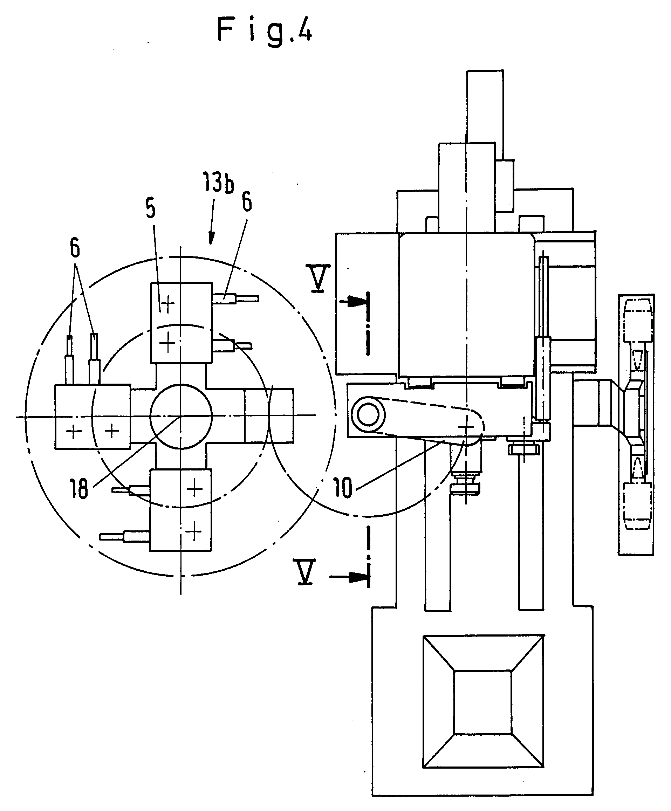

Um den Werkzeugspindelträger 5 auf dem jeweiligen Ablageplatz 14 bis 16 zu fassen, wird bei der Ausführungsform nach Fig. 4 die Greiferhand 9 mit den Griffleisten 25 bis 28 entgegen Pfeilrichtung 50 (Fig. 7) unter die Kegelstumpfabschnitte 29, 30 der Aufnahmebolzen 7, 8 des Werkzeugspindelträgers 5 geschwenkt. Bei der Ausführungsform nach Fig. 3 wird bei ausgeschwenktem Greiferarm 10 die Schlitteneinheit 3 in Pfeilrichtung 37 so verfahren, daß die Greiferhand 9 entsprechend Pfeilrichtung 48 über die Aufnahmebolzen 7, 8 geschoben Wird. Die Griffleisten 25 bis 28 haben dabei Abstand von den Unterseiten der Kegelstumpfabschnitte 29, 30. Anschließend wird die Greiferhand 9 in noch zu beschreibender Weise aufwärts bewegt. Dadurch kommen die Griffleisten 25, 26 der Greiferhand 9 an der Unterseite der Kegelstumpfabschnitte 30 zur Anlage und nehmen dann beim weiteren Anheben über die Aufnahmebolzen 7, 8 den Werkzeugspindelträger 5 mit. Er hängt dann unter seinem Gewicht auf den Griffleisten 25, 26. In dieser vom jeweiligen Ablageplatz 14 bis 16 abgehobenen Stellung läßt sich dann der Werkzeugspindelträger 5 durch Schwenken des Greiferarms 10 um 180° und gleichzeitigem Zurückdrehen der Greiferhand 9 um 90° zur Antriebseinheit 4 bewegen (Fig. 1 bis 3). Dort wird der Werkzeugspindelträger 5 in bekannter Weise mit der Antriebseinheit 4 gekuppelt. Diese Kuppelstellung ist in Fig. 2 dargestellt. Der Werkzeugspindelträger 5 hängt noch mit seinen Aufnahmebolzen 7, 8 in der Greiferhand 9.

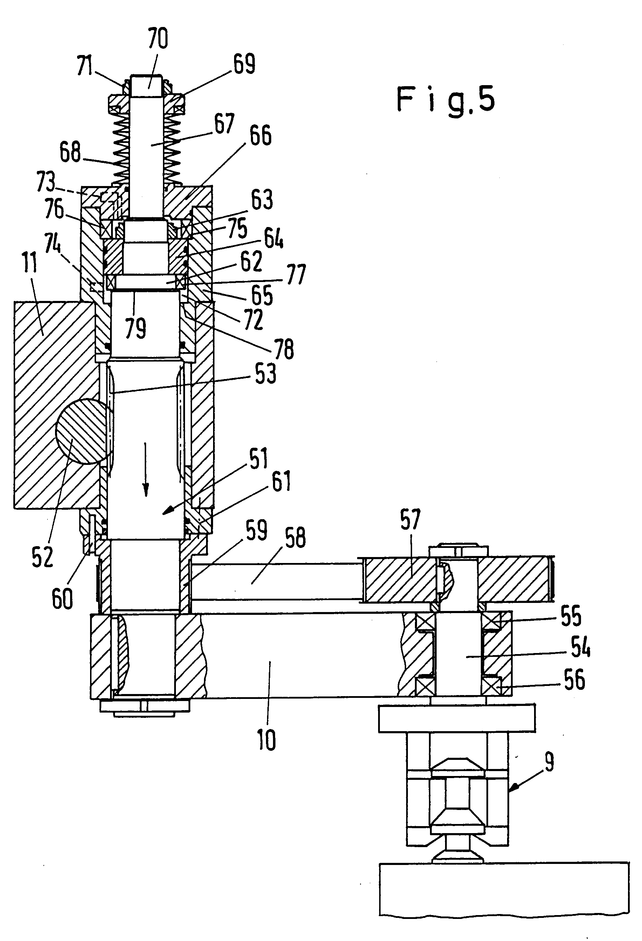

Der Schwenkantrieb für den Greiferarm 10 wird anhand von Fig. 5 näher erläutert. Die Lagerbrücke 11 wird von einer Welle 51 durchsetzt, auf deren nach unten aus der Lagerbrücke ragendes Ende der Greiferarm 10 drehfest sitzt. In der Lagerbrücke 11 ist eine Zahnstange 52 untergebracht, die mit einem Zahnradabschnitt 53 der Welle 51 innerhalb der Lagerbrücke 11 in Eingriff ist. Durch Verschieben der Zahnstange 52 wird die Welle 51 um ihre Achse gedreht, wodurch der drehfest auf ihr sitzende Greiferarm 10 geschwenkt wird.

An dem von der Welle 51 abgewandten Ende wird der Greiferarm 10 von einer weiteren Welle 54 durchsetzt, die an ihrem nach unten über den Greiferarm ragenden Ende die Greiferhand 9 drehfest trägt. Innerhalb des Greiferarmes 10 ist die Welle 54 durch zwei mit Abstand übereinanderliegende Lager 55, 56 drehbar gelagert. Auf dem nach oben über den Greiferarm 10 ragenden Ende der Welle 54 sitzt drehfest eine Zahnriemenscheibe 57, über die ein endloser Zahnriemen 58 geführt ist. Er umschlingt außerdem eine Zahnriemenhülse 59, die die Welle 51 umgibt und über eine Verdrehsicherung 60 drehfest, aber axial verschiebbar mit einer an der Unterseite der Lagerbrücke 11 befestigten Hülse 61 verbunden ist. Wird der Greiferarm 10 geschwenkt, dann wälzt sich der Zahnriemen 58 auf der drehfesten Zahnriemenhülse 59 ab. Gleichzeitig wird durch den Zahnriemen 58 der Zahnriemenscheibe 57 eine entgegengerichtete Drehbewegung aufgezwungen. Aufgrund der Durchmesserverhältnisse von Zahnriemenhülse 59 zu Zahnriemenscheibe 57 ergibt sich das jeweilige Übersetzungsverhältnis und damit der Grad der Rückdrehung der Greiferhand 9. Beim beispielhaft gewählten Übersetzungsverhältnis von 1:2 ergibt sich eine 90°-Rückdrehung bei einer Verschwenkung des Greifarmes 10 um 180°.

Auf der Welle 51 sitzt zwischen einem Bund 62 und einer Mutter 63 axial lagegesichert ein Kolben 64, mit dem die Welle 51 in Axialrichtung verschoben werden kann. Der Kolben 64 ist in einem Zylindergehäuse 65 untergebracht, das durch einen Deckel 66 geschlossen ist. Durch ihn ragt die Welle 51 mit einem im Durchmesser verringerten Ansatz 67. Er ist von einem Tellerfederpaket 68 umgeben, das sich auf dem Deckel 66 sowie an einem ringscheibenförmigen Widerlager 69 aufstützt, das auf dem Ansatz 67 sitzt und durch eine auf das Gewindeende 70 des Ansatzes 67 geschraubte Mutter 71 gehalten ist.

In den Zylinderraum 72 münden oberhalb und unterhalb des Kolbens 64 Bohrungen 73 und 74 für die Zu- und Abführung des Hydraulikmediums. In Fig. 5 ist der Kolben 64 in seiner oberen Endlage dargestellt, in der er an einem zwischen dem Deckel 66 und einem Ansatz 75 an der Innenseite des Zylindergehäuses 65 mit Axialspiel eingepaßten Axiallager 76 anliegt. In der unteren Lage kommt der Kolben 64 mit einem Axiallager 77 an einem Absatz 78 in der Innenwand des Zylindergehäuses 65 zur Anlage. Das Axiallager 77 ist zwischen dem Kolben 64 und einem Absatz 79 der Welle 51 angeordnet.

Der Zahnabschnitt 53 auf der Welle 51 ist ausreichend lang, so daß sie mit dem Hydraulikantrieb axial verschoben werden kann, ohne daß der Eingriff mit der Zahnstange 52 verloren geht. Durch Axialverschieben der Welle 51 können die in der Greiferhand 9 des Greiferarmes 10 hängenden Werkzeugspindelträger 5 angehoben bzw. abgesenkt werden.

Um den Werkzeugspindelträger 5 zu fassen, wird der Greiferarm 10 mit der Greiferhand 9 durch den Hydraulikantrieb abgesenkt, indem der Kolben 64 nach unten verschoben wird. Hierbei wird das Tellerfederpaket 68 zusammengedrückt. In der abgesenkten Stellung kann die Greiferhand 9 mit den Griffleisten 25 bis 28 unter die Kegelstumpfabschnitte 29, 30 der Aufnahmebolzen 7, 8 des Werkzeugspindelträgers 5 geschwenkt werden. Die Griffleisten haben dann Abstand von den Unterseiten der Kegelstumpfabschnitte 29, 30 (Fig. 6). Anschließend wird der Kolben 64 aufwärts bewegt, wodurch die Welle 51 und damit der Greiferarm 10 mit der Greiferhand 9 angehoben wird. Diese Hebebewegung wird durch das Tellerfederpaket 68 unterstützt. Die Griffleisten 27, 28 kommen in der beschriebenen Weise an der Unterseite 47 der Aufnahmebolzen 7, 8 zur Anlage und nehmen dann beim weiteren Anheben über die Aufnahmebolzen den Werkzeugspindelträger 5 mit. Er hängt dann unter seinem Gewicht auf den Griffleisten 25, 26 (Fig. 5). Das Tellerfederpaket 68 übernimmt die Sicherung des angehobenen Werkzeugspindelträgers 5.

Mit dem Greiferarm 10 können Werkzeugspindelträger 5, die mehrere Werkzeuge 6 tragen, vollautomatisch gewechselt werden. Die Bearbeitungsmaschine ist zusätzlich mit einem Doppelgreifer 31 versehen, der auf der dem Greiferarm 10 gegenüberliegenden Seite der Antriebseinheit 4 angeordnet ist. Der Doppelgreifer 31 ist um eine senkrecht zur Schwenkachse 20 und parallel zur Verfahrrichtung der Schlitteneinheit 3 liegende Achse 32 drehbar. An seinen beiden Enden ist der Doppelgreifer 31 mit jeweils einer Greiferzange 33 und 34 versehen, mit denen der Doppelgreifer aus einem ortsfesten Werkzeugmagazin 35 Einzelwerkzeuge in bekannter Weise entnehmen kann. Hierzu wird der Doppelgreifer 31 um die Achse 32 gedreht, so daß die eine Greiferzange 33 oder 34 das entsprechende Einzelwerkzeug im Werkzeugmagazin 35 erfassen kann. Gleichzeitig kann die jeweils andere Greiferzange das in der Arbeitsspindel befindliche Einzelwerkzeug erfassen. Anschließend wird der Doppelgreifer 31 zunächst in Richtung der Drehachse 32 verfahren, so daß das in der Arbeitsspindel befindliche Einzelwerkzeug von der Arbeitsspindel freikommt. Anschließend wird der Doppelgreifer 31 in bekannter Weise um 180° um die Achse 32 gedreht. Durch Zurückfahren des Doppelgreifers 31 wird dann dieses Einzelwerkzeug in bekannter Weise in die Arbeitsspindel gebracht, während das andere Einzelwerkzeug im Werkzeugmagazin 35 abgelegt wird.

Das Werkzeugmagazin 35 befindet sich auf der dem Speichersystem 13 gegenüberliegenden Seite des Maschinenbettes 1 und ist vorzugsweise an ihm angeordnet.

Mit der beschriebenen Bearbeitungsmaschine lassen sich somit sowohl Werkzeugspindelträger 5 mit mehreren Werkzeugen 6 als auch Einzelwerkzeuge vollautomatisch wechseln.

Fig. 3 zeigt in Draufsicht eine weitere Möglichkeit, wie an der Bearbeitungsmaschine Speichersysteme angeordnet werden können. Der Greiferarm 10 ist in Richtung auf die Antriebseinheit 5 (Fig. 2) zurückgeschwenkt. Der Doppelgreifer 31, der längs einer Führung 36, die sich parallel zur Verfahrrichtung 37 der Schlitteneinheit 3 erstreckt, verfahrbar ist, befindet sich in seiner Ruhestellung (vgl. auch Fig. 1 und 2). Auf der Führung 36 kann der Doppelgreifer 31 verfahren werden, um das jeweilige Einzelwerkzeug in die Arbeitsspindel einzusetzen bzw. aus ihr herauszuziehen. Fig. 3 zeigt schematisch auch die Ablagestelle 38 für das mit den jeweiligen Werkzeugen zu bearbeitende Werkstück 39. Das auf der einen Seite des Maschinenbettes 3 befindliche Speichersystem 13a ist als Drehkreuz ausgebildet, das um die vertikale Achse 18 drehbar ist. Dadurch können nacheinander die jeweiligen Werkzeugspindelträger 5 in eine Übergabeposition 40 gedreht werden. Die Werkzeugspindelträger 5 sind so auf den Ablageplätzen des Speichersystems 13a angeordnet, daß die Werkzeuge 6 in Richtung auf die Drehachse 18 ragen. Wird der Werkzeugspindelträger 5 an der Übergabepositon 40 von der Greiferhand 9 des Greiferarmes 10 in der beschriebenen Weise erfaßt, dann wird der Werkzeugspindelträger beim Transport zur Antriebseinheit 4 durch die 180°-Schwenkung des Greiferarmes 10 und der gegenläufigen 90°-Drehung der Greiferhand 9 in die zum Anschluß an die Antriebseinheit 4 erforderliche Lage gedreht.

Damit die Werkzeuge 6 einfach am Werkzeugspindelträger 5 montiert bzw. ausgewechselt werden können, sind die Ablageplätze des Speichersystems 13a vorteilhaft als Drehtische ausgebildet. Dadurch können die Werkzeugspindelträger 5 durch Drehen dieses Tisches in eine Lage gebracht werden, in der die Werkzeuge 6 nicht mehr nach innen zur Drehachse 18 des Speichersystems 13a, sondern nach außen gerichtet sind. Dies ist in Fig. 3 beispielhaft für den oberen Werkzeugträger dargestellt. In dieser Stellung können die gewünschten Werkzeuge sehr einfach manuell oder ebenfalls vollautomatisch ein- und ausgewechselt werden. Anschließend kann der Tisch wieder gedreht werden, so daß die Werkzeuge 6 in Richtung auf die Drehachse 18 weisen.

Auf der dem Speichersystem 13a gegenüberliegende Seite der Bearbeitungsmaschine befindet sich wiederum das ortsfeste Werkzeugmagazin 35, in dem Einzelwerkzeuge 41 untergebracht sind, die mit dem Doppelgreifer 31 gewechselt werden können.

Bei der Ausführungsform gemäß Fig. 4 ist das Speichersystem 13b ein einfaches Drehkreuz, dessen Ablageplätze nicht gedreht werden können. Die Werkzeuge 6 sind, da sie nicht nach innen zur Drehachse 18 des Speichersystems 13b weisen, zum Auswechseln leicht zugänglich. Im übrigen ist diese Bearbeitungseinheit gleich ausgebildet wie das zuvor beschriebene Ausführungsbeispiel.

Die beschriebenen Bearbeitungs- bzw. Werkzeugmaschinen haben eine hohe Flexibilität, da vollautomatisch n-spindlige Werkzeugspindelträger 5 und Einzelwerkzeuge 41 gewechselt werden können. Die Wechseleinrichtung ist konstruktiv einfach ausgebildet, weil nur ein einziger Greiferarm 10 als einarmiger Hebel vorgesehen ist. Mit ihm können in der beschriebenen Weise vom jeweiligen Ablageplatz 14 bis 16, der seitlich an der Maschine angeordnet ist, die Werkzeugträger 5 eingewechselt werden. Dieser Werkzeugspindelträger 5 kann nicht nur, wie beschrieben, mehrere Werkzeuge 6 aufweisen, sondern auch eine Spindelaufnahme für die Einzelwerkzeuge 41 haben. In sie können vom ortsfesten Werkzeugmagazin 35 aus die Einzelwerkzeuge 41 mit dem Doppelgreifer 31 eingewechselt werden.

Die Wechseleinrichtung ist kompakt ausgebildet, wobei der zum Wechseln der Werkzeugspindelträger 5 benötigte Raum sehr klein gehalten werden kann. Die bewegten Massen der Wechseleinrichtung sind sehr gering, da nur der Greiferarm 10 mit der Greiferhand 9 zum Wechseln benötigt wird. Infolge der Wechseleinrichtung ist die Werkzeugmaschine mit beliebigen Werkzeugspindelträger-Speichersystemen verkettbar. Die Werkzeugspindelträger 5 können, wenn die Wechseleinrichtung in Y-Richtung verfahrbar ist, in jeder Höhe abgelegt werden. Dadurch ist eine optimale Arbeitshöhe für den Werkzeugwechsel möglich. Durch den Einsatz von unterschiedlichen Werkzeugspindelträgern, z.B. Werkzeugspindelträger mit extrem schnellen oder langsamen Spindeln, sowie mit speziellen Werkzeugaufnahmen für Einzelwerkzeuge ist eine hohe Flexibilität der Werkzeugmaschine möglich. In den beschriebenen Ausführungsbeispielen wird die Greiferhand 9 beim Verschwenken des Greiferarms 10 um 90° (Fig. 1 bis 3) bzw. 180° (Fig. 4) zurückgedreht. Selbstverständlich ist durch entsprechende Wahl der Übersetzung auch ein Zurückdrehen der Greiferhand 9 in beliebige Winkelstellungen möglich. Dadurch können die Werkzeugspindelträger 5 auf den Ablageplätzen der Speichersysteme auch unterschiedliche Lagen einnehmen. Dadurch ist eine optimale Anordnung der Werkzeugspindelträger möglich, so daß auch Rücksicht auf die jeweiligen Einbauverhältnisse genommen werden kann.

Die Greiferhand 9 der Wechseleinrichtung wird nur mit formschlüssigen Elementen, nämlich mit den Griffleisten 25 bis 28, an die Werkzeugspindelträger 5 gekuppelt. Zusätzliche Spann- oder Verriegelungseinrichtungen sind nicht erforderlich.

Die Aufnahmebolzen 7, 8 der Werkzeugspindelträger 5 können außer für die Greiferhand 9 auch zur Aufnahme in einem übergeordneten Übersetzer, wie beispielsweise einem Portalkran, verwendet werden.

## Patentansprüche

1. Wechseleinrichtung für Werkzeugspindelträger an einer Bearbeitungsmaschine, mit einer Halterung, an die die Werkzeugspindelträger mit aufwärts ragenden Aufnahmeteilen anhängbar sind und die am freien Ende eines um eine vertikale Achse schwenkbaren Armes vorgesehen ist, und mit einem Antrieb zum Verstellen der Wechseleinrichtung, dadurch gekennzeichnet, daß die Aufnahmeteile (7, 8) zur hängenden Lagerung der Werkzeugspindelträger (5) auf unbewegliche Griffleisten (25, 26) der Halterung (9) auflegbar sind, die eine eine vertikale Drehachse (29) aufweisende, als Drehkörper ausgebildete Greiferhand ist, die in bezug auf den Arm (10) drehbar ist, der als einarmiger Hebel ausgebildet ist, und daß die Griffleisten (25, 26) zwischen die Aufnahmeteile (7, 8) der Werkzeugspindelträger einführbar sind.

2. Einrichtung nach Anspruch 1,
dadurch gekennzeichnet, daß die Greiferhand (9) zwangläufig beim Schwenken des Greiferarmes (10) angetrieben ist.

3. Einrichtung nach Anspruch 1 oder 2,
dadurch gekennzeichnet, daß die Drehbewegung der Greiferhand (9) der Schwenkbewegung des Greiferarmes (10) entgegengerichtet ist.

4. Einrichtung nach einem der Ansprüche 1 bis 3,
dadurch gekennzeichnet, daß der Greiferarm (10) um etwa 180° zwischen seinen beiden Endstellungen schwenkbar ist.

5. Einrichtung nach einem der Ansprüche 1 bis 4,
dadurch gekennzeichnet, daß die Greiferhand (9) um etwa 90° bei der Schwenkbewegung des Greiferarmes (10) drehbar ist.

6. Einrichtung nach einem der Ansprüche 1 bis 5,
dadurch gekennzeichnet, daß der Greiferarm (10) an einer Lagerbrücke (11) schwenkbar gelagert ist, die vorzugsweise höhenverstellbar ist.

7. Einrichtung nach einem der Ansprüche 1 bis 6,
dadurch gekennzeichnet, daß die Griffleisten (25 bis 28) an Platten (23, 24) vorgesehen sind, die von einem Träger (22) der Greiferhand (9) nach unten abstehen.

8. Einrichtung nach Anspruch 7,
dadurch gekennzeichnet, daß die Griffleisten (25 bis 28) in Richtung zueinander über die Platten (23, 24) ragen.

9. Einrichtung nach Anspruch 7 oder 8,
dadurch gekennzeichnet, daß jede Platte (23, 24) zwei mit Abstand übereinanderliegende Griffleisten (25, 27 und 26, 28) aufweist.

10. Einrichtung nach einem der Ansprüche 1 bis 9,
dadurch gekennzeichnet, daß die Aufnahmeteile (7, 8) der Werkzeugspindelträger (5) einen Auflagerteil (30) aufweisen, der in Hängelage der Werkzeugspindelträger (5) auf den Griffleisten (25, 26) aufliegt.

11. Einrichtung nach Anspruch 10,
dadurch gekennzeichnet, daß die Auflagerteile (30) kegelstumpfförmig ausgebildet sind.

12. Einrichtung nach Anspruch 10 oder 11,
dadurch gekennzeichnet, daß der Abstand zwischen übereinanderliegenden Griffleisten (25 bis 28) jeder Platte (23, 24) größer als die Höhe der Auflagerteile (30) ist.

13. Einrichtung nach einem der Ansprüche 10 bis 12,
dadurch gekennzeichnet, daß die Auflagerteile (30) formschlüssig auf den Griffleisten (25, 26) gehalten sind.

14. Einrichtung nach einem der Ansprüche 1 bis 13,
dadurch gekennzeichnet, daß der Werkzeugspindelträger (5) eine Aufnahme für Einzelwerkzeuge (41) aufweist.

15. Einrichtung nach einem der Ansprüche 1 bis 14,
dadurch gekennzeichnet, daß die Bearbeitungsmaschine einen Doppelgreifer (31) zum Einwechseln der Einzelwerkzeuge (41) aufweist.

## Claims

1. Changing mechanism for tool spindle carriers on a processing machine, having a mount onto which the tool spindle carriers can be hung with their locating parts projecting upwards, and which is provided at the free end of an arm adapted to pivot about a vertical axis, and having a drive for adjusting the changing mechanism, characterised in that the locating parts (7, 8) for suspended mounting of the tool spindle carriers (5) are adapted to be placed onto immovable gripping gibs (25, 26) of the mount (9), which is a gripper hand in the form of a rotary body incorporating a vertical rotary shaft (29), said hand being rotatable in relation to the arm (10), which is in the form of a one-armed lever, and in that the gripping gibs (25, 26) are adapted to be introduced between the locating parts (7, 8) of the tool spindle carriers.

2. Mechanism according to claim 1,
characterised in that the gripper hand (9) is driven in constrained manner as the gripper arm (10) is being pivoted.

3. Mechanism according to claim 1 or 2,
characterised in that the rotary motion of the gripper hand (9) is in the opposite direction to the pivoting motion of the gripper arm (10).

4. Mechanism according to any of claims 1 to 3,
characterised in that the gripper arm (10) can be pivoted through approximately 180° between its two extreme positions.

5. Mechanism according to any of claims 1 to 4,
characterized in that the gripper hand (9) can be rotated through approximately 90° during the pivoting motion of the gripper arm (10).

6. Mechanism according to any of claims 1 to 5,
characterized in that the gripper arm (10) is pivotably mounted on a bearing bracket (11) which is preferably adjustable in height.

7. Mechanism according to any of claims 1 to 6,
characterised in that the gripping gibs (25 to 28) are provided on plates (23, 24) which protrude downwards from a support (22) for the gripper hand (9).

8. Mechanism according to claim 7,
characterized in that the gripping gibs (25 to 28) project towards one another across the plates (23, 24).

9. Mechanism according to claim 7 or 8,
characterized in that each plate (23, 24) incorporates two gripping gibs (25, 27 and 26, 28) spaced one above the other.

10. Mechanism according to any of claims 1 to 9,
characterized in that the locating parts (7, 8) of the tool spindle carriers (5) incorporate a supporting part (30) which rests on the gripping gibs (25, 26) when the tool spindle carriers (5) are in the suspended position.

11. Mechanism according to claim 10,
characterized in that the supporting parts (30) are shaped like truncated cones.

12. Mechanism according to claim 10 or 11,
characterised in that the distance between superjacent gripping gibs (25 to 28) of each plate (23, 24) is greater than the height of the supporting parts (30).

13. Mechanism according to any of claims 10 to 12,
characterised in that the supporting parts (30) are held interlocked on the gripping gibs (25, 26).

14. Mechanism according to any of claims 1 to 13,
characterised in that the tool spindle carrier (5) incorporates a locator for individual tools (41).

15. Mechanism according to any of claims 1 to 14,
characterised in that the processing machine incorporates a double gripper (31) for swapping in the individual tools (41).

## Revendications

1. Dispositif d'échange pour support de broches à outils dans une machine d'usinage, comprenant une monture sur laquelle peuvent être suspendus les supports avec des parties de réception qui se projettent vers le haut, et ladite monture étant prévue à l'extrémité libre d'un bras pivotant autour d'un axe vertical, et comprenant un entraînement pour le déplacement du dispositif d'échange, caractérisé en ce que pour le stockage en suspension des supports (5) des broches à outils, les parties de réception (7, 8) peuvent être appliquées sur des barrettes d'accrochage (25, 26) de la monture (9), la monture étant une main d'accrochage réalisée sous la forme d'un corps rotatif et ayant un axe de rotation (29) vertical, ladite main d'accrochage pouvant être pivotée par rapport au bras (10), lequel est réalisé sous la forme d'un levier à un seul bras, et en ce que les barrettes d'accrochage (25, 26) peuvent être introduites entre les parties de réception (7, 8) des supports de broche à outils.

2. Dispositif selon la revendication 1, caractérisé en ce que la main d'accrochage (9) est entraînée obligatoirement lors du basculement du bras d'accrochage (10).

3. Dispositif selon la revendication 1 ou 2, caractérisé en ce que le mouvement de rotation de la main d'accrochage (9) est dirigé à l'opposé du mouvement de basculement du bras d'accrochage (10).

4. Dispositif selon l'une des revendications 1 à 3, caractérisé en ce que le bras d'accrochage (10) peut être pivoté sur environ 180° entre ses deux positions finales.

5. Dispositif selon l'une des revendications 1 à 4, caractérisé en ce que la main d'accrochage (9) peut être pivotée sur environ 90° lors du mouvement de basculement du bras d'accrochage (10).

6. Dispositif selon l'une des revendications 1 à 5, caractérisé en ce que le bras d'accrochage (10) est monté pivotant sur un pont de montage (11), lequel est de préférence réglable en hauteur.

7. Dispositif selon l'une des revendications 1 à 6, caractérisé en ce que les barrettes d'accrochage (25 à 28) sont prévues sur des plaques (23, 24) qui dépassent vers le bas depuis un support (22) de la main d'accrochage (9).

8. Dispositif selon la revendication 7, caractérisé en ce que les barrettes d'accrochage (25 à 28) dépassent au-delà des plaques (23, 24) en direction les unes des autres.

9. Dispositif selon l'une ou l'autre des revendications 7 et 8, caractérisé en ce que chaque plaque (23, 24) comporte deux barrettes d'accrochage qui sont situées à distance l'une au-dessus de l'autre (25, 27 et 26, 28).

10. Dispositif selon l'une des revendications 1 à 9, caractérisé en ce que les parties de réception (7, 8) des supports (5) de broches à outils comportent une partie d'appui (30) qui est appliquée sur les barrettes d'accrochage (25, 26) dans la position suspendue des supports (5) de broches à outils.

11. Dispositif selon la revendication 10, caractérisé en ce que les parties d'appui (30) sont réalisées en forme de tronc de cône.

12. Dispositif selon l'une des revendications 10 ou 11, caractérisé en ce que la distance entre les barrettes d'accrochage superposées (25 à 28) de chaque plaque (23, 24) est supérieure à la hauteur des pièces d'appui (30).

13. Dispositif selon l'une des revendications 10 à 12, caractérisé en ce que les pièces d'appui (30) sont retenues en coopération de formes sur les barrettes d'accrochage (25, 26).

14. Dispositif selon l'une des revendications 1 à 13, caractérisé en ce que le support (5) de broche à outils présente un logement pour un outil individuel (41).

15. Dispositif selon l'une des revendications 1 à 14, caractérisé en ce que la machine d'usinage comprend un organe à pince double (31) pour l'échange des outils individuels (41).
